# EUROPÄISCHE PATENTSCHRIFT

(11) **EP 0 978 396 B1**
(45) Veröffentlichungstag und Bekanntmachung des Hinweises auf die Patenterteilung: **09.06.2004**
(21) Anmeldenummer: 99114983.2
(22) Anmeldetag: 31.07.1999
(51) Int. Cl.: B60C 9/22, B60C 9/20, B29D 30/44, B29D 30/70

(54) **Fahrzeugluftreifen**
Vehicle tyre
Bandage pneumatique pour véhicule

(30) Priorität: 07.08.1998 DE 19834991
(43) Veröffentlichungstag der Anmeldung: 09.02.2000
(73) Patentinhaber: Continental Aktiengesellschaft, 30165 Hannover (DE)
(72) Erfinder: Glinz, Michael, 31535 Neustadt (DE)

(56) Entgegenhaltungen:
- EP-A- 0 371 754
- EP-A- 0 698 510
- EP-A- 0 791 485

## Beschreibung

Die gegenständliche Erfindung betrifft einen Fahrzeugluftreifen mit einem profilierten Laufstreifen, einer insbesondere einlagig ausgeführten Radialkarkasse, die um Wulstkerne in Wulstbereichen umgeschlagen ist, einem zumindest einlagigen Gürtel und einer Gürtelbandage, die aus einem Cord oder Faden aus organischem Fasermaterial besteht, weicher zumindest im wesentlichen parallel zur Umfangsrichtung des Reifens spiralförmig gewickelt ist Die gegenständliche Erfindung betrifft femer eine Vorrichtung zum Aufbringen einer spiralförmig um den Gürtel eines Fahrzeugluftreifens gewickelten Gürtelbandage.

Bei Fahrzeugluftreifen, die für höhere Fahrgeschwindigkeiten geeignet sein sollen, ist es wichtig, bei hohen Fahrgeschwindigkeiten, bedingt durch die hohen Zentrifugalkräfte, Deformationen, insbesondere Durchmesservergrößerungen im Laufstreifenbereich und dort vor allem in den Schulterbereichen, zu vermeiden. Es ist daher üblich geworden, zumindest für höhere Geschwindigkeiten vorgesehene Fahrzeugluftreifen mit einer Gürtelbandage zu versehen. So ist es beispielsweise aus der EP-A 0 524 701, die einen Fahrzeugluftreifen der eingangs genannten Art betrifft, bekannt, auf der radial äußeren Seite des Gürtels eine Gürtetbandage spiralförmig zu wickeln, die aus einem Band besteht, welches einen oder mehrere fortlaufende organische Fasercorde enthält. Um einen für den Hochgeschwindigkeitsbereich tauglichen Reifen zu schaffen, bei dem die sonstigen erwünschten Reifeneigenschaften nicht negativ beeinflußt werden, wird vorgeschlagen, dieses Band derart spiralförmig zu wickeln, daß der Abstand des organischen Fasercordes in den Schulterbereichen des Reifens kleiner gewählt wird als im Mittelbereich bzw. Zenitbereich des Reifens. Für den Fall, daß als Gürtelbandage ein einzelner organischer Fasercord gewickelt wird, wird dieser vorzugsweise mit einer Gummischicht bedeckt. Alternativ dazu kann auch eine Vielzahl organischer Fasercorde in Gummi eingebettet und zu einer Bandform geformt sein.

In der EP-B 0 319 588 wird femer ein Verfahren zur Herstellung eines Radialreifens beschrieben, um dessen Gürtel kontinuierlich und spiralförmig in Umfangsrichtung entweder ein Fasercord oder mehrere organische Fasercorde gewickelt wird bzw. werden, um eine Gürtelbandage bilden. Dabei wird die Spannung, die an den organischen Fasercord gelegt wird, wenn der Cord gewickelt wird, derart geändert, daß sie ein Minimum im Reifenzenitbereich und ein Maximum in den Schulterbereichen ist. Alternativ dazu kann die Spannung, die an den organischen Fasercord angelegt wird, konstant gehalten werden und der Durchmesser der Cordwicklung im gewickelten Zustand graduell vom Reifenzenitberich in Richtung auf die Schulterbereiche des Reifens abnehmen.

EP-A-0 698 510 zeigt einen gattungsgemäßen Fahrzeugluftreifen, der dem Oberbegriff des Anspruchs 1 entspricht.

Eine Vorrichtung zur Herstellung einer spiralförmig gewickelten Gürtelbandage, die es gestattet, die Bandage mit unterschiedlicher Spannung auf den Gürtel bei der Herstellung des Reifens aufzuwickeln, ist beispielsweise aus der EP-B 0 288 609 bekannt. Diese bekannte Vorrichtung umfaßt eine Einrichtung, mit der die Wickelspannung geändert werden kann, femer Sensoren bzw. Detektoren zum Bestimmen der jeweiligen Wickelposition der Bandage und eine Steuereinrichtung, mit der die Bandagenspannung in Abhängigkeit von der jeweiligen Wickelposition geändert wird, sodaß die Bandage beispielsweise mit höheren Zugkräften im Reifenzenitbereich und mit niedrigeren Zugkräften an den axial äußeren Bereichen aufgebracht werden kann.

Für die Hochgeschwindigkeitstauglichkeit eines Fahrzeugluftreifens und für einen gleichmäßigen Abrieb hat es sich nun als günstig herausgestellt, wenn entweder die Bandagenspannung über die Breite der Bandage gleichmäßig hoch ist oder wenn im Bereich der Gürtelkanten bzw. im Bereich der Reifenschultern die Bandagenspannung höher ist als im Reifenzenitbereich. Die bekannten Verfahren zum Erzeugen einer unterschiedlichen Bandagenspannung erfordern entsprechend stabil und daher relativ aufwendig aufgebaute Vorrichtungen und auch einen relativ umfangreichen Steuerungsaufwand.

Die Erfindung hat sich nun die Aufgabe gestellt, eine alternative, einfache Lösung zu den bekannten Lösungen aufzufinden, um bei einem Fahrzeugluftreifen der eingangs genannten Art im Bereich der Gürtelkanten bzw. zu den Reifenschulterbereichen zu eine zumindest gleich hohe, insbesondere eine höhere Bandagenspannung als im Reifenzenitbereich zu erreichen. Die Erfindung hat femer zur Aufgabe, eine einfache Vorrichtung zur Erzeugung einer solchen unterschiedlichen Bandagenspannung vorzuschlagen.

Gelöst wird die gestellte Aufgabe erfindungsgemäß dadurch, daß der Bandagencord - oder faden um sich selbst verdreht ist, wobei die Verdrehung im Reifenzenitbereich größer ist als an den Gürtelkantenbereichen.

Der gemäß der gegenständlichen Erfindung in sich verdrehte Cord oder Faden besitzt je nach dem Ausmaß der Verdrehung, eine unterschiedliche Federwirkung, wobei im Reifenzenitbereich, wo bei der Reifenvulkanisation eine Resterhebung in größerem Ausmaß stattfindet als in den Schulterbereichen, die Verdrehung größer gewählt wird. Bei entsprechender Einstellung der jeweiligen Verdrehung kann daher die Aufzugsspannung des Cordes konstant gehalten werden, aber gleichzeitig eine höhere Bandagenspannung in den Schulterbereichen erreicht werden.

Gemäß einer bevorzugten Ausführungsform der Erfindung ist die Anzahl der Verdrehungen pro Längeneinheit verdrehter Cord im Reifenzenitbereich das 1,2 bis 2,5-fache der Anzahl der Verdrehungen pro Längeneinheit verdrehter Cord an den Gürtelkantenbereichen.

Bei einer weiteren bevorzugten Ausführungsform wird die Ausgestaltung so getroffen, daß im mittleren Drittel zwischen den Randkanten der breitesten Gürtellage die Drehung zumindest im wesentlichen konstant gehalten ist.

Bevorzugt wird dabei in den beiden axial äußeren Dritteln zwischen den Randkanten der breitesten Gürtellage die Verdrehung des Cordes zunehmend kleiner.

Die gegenständliche Erfindung bietet gegenüber Ausführungsformen, wo ein mit mehreren Corden versehenes Band gewickelt wird, den Vorteil, daß der Abstand der Windungen im Bereich der Gürtelkanten kleiner gewählt werden kann als im Reifenzenitbereich.

Die Vorrichtung zum Aufbringen einer derartigen Bandage auf den Gürtel eines Reifens umfaßt eine drehbare Reifen- oder Gürtelaufbautrommel, zumindest eine Spule, von welcher der Bandagencord abgewickelt wird und ein der Trommel unmittelbar vorgelagertes Führungselement, durch welches der Bandagencord auf die Gürtellagen des Reifens gewickelt wird.

Die erfindungsgemäße Vorrichtung ist dadurch gekennzeichnet, daß sie einen den Bandagencord eindrehenden Verdrehkopf und eine programmgesteuerte Elektronik umfaßt, die das Aufwickeln des in sich verdrehten Cordes mit größerer Verdrehung im Zentibereich und mit geringerer Verdrehung in den Seitenbereichen der Trommel bewirkt.

Bei einer bevorzugten Ausführungsform der Erfindung ist die Spule zusätzlich zu der über den Verdrehkopf erfolgenden Verdrehrichtung gleichen Richtung drehbar gelagert. Diese Maßnahme vermeidet ein unerwünschtes Eindrehen des von der Spule abgewickelten Cordes.

Dabei ist es bei dieser Ausführung von Vorteil, wenn der Verdrehkopf der Spule unmittelbar vorgelagert ist.

Bei einer alternativen Ausführungsform der Erfindung erfolgt die Steuerung des Verdrehkopfes derart, daß der Verdrehkopf den Cord mit übereinstimmender Anzahl von Verdrehungen in die eine und in die andere Richtung verdreht. Bei dieser Ausführungsform kann daher ein gegenläufiges Verdrehen.der Spule unterbleiben und es wird die Anordnung auch insbesondere so getroffen, daß der Verdrehkopf dem Führungselement unmittelbar vorgeordnet ist.

Gemäß einer weiteren bevorzugten Ausführungsform der Erfindung wird der Verdrehkopf in Abhängigkeit von der jeweiligen Position des Führungselementes, die mittels Sensoren ermittelt wird, und gegebenenfalls unter Einbezug der Länge des Cordes zwischen Verdrehkopf und Aufbringstelle auf den Gürtel gesteuert.

Weitere Merkmale, Vorteile und Einzelheiten der Erfindung werden nun an Hand der Zeichnung näher erläutert. Hierbei zeigt Fig. 1 schematisch einen Querschnitt durch eine Ausführungsform eines erfindungsgemäß ausgeführten Fahrzeugluftreifens, Fig. 2 schematisch die Art und Weise der Wicklung eines Bandagencordes auf das Gürtelpaket eines Fahrzeugluftreifens und Fig. 3 schematisch eine Ausführungsform einer erfindungsgemäßen Vorrichtung zum Aufbringen eines gewickelten Cordes auf einen Fahrzeugluftreifen.

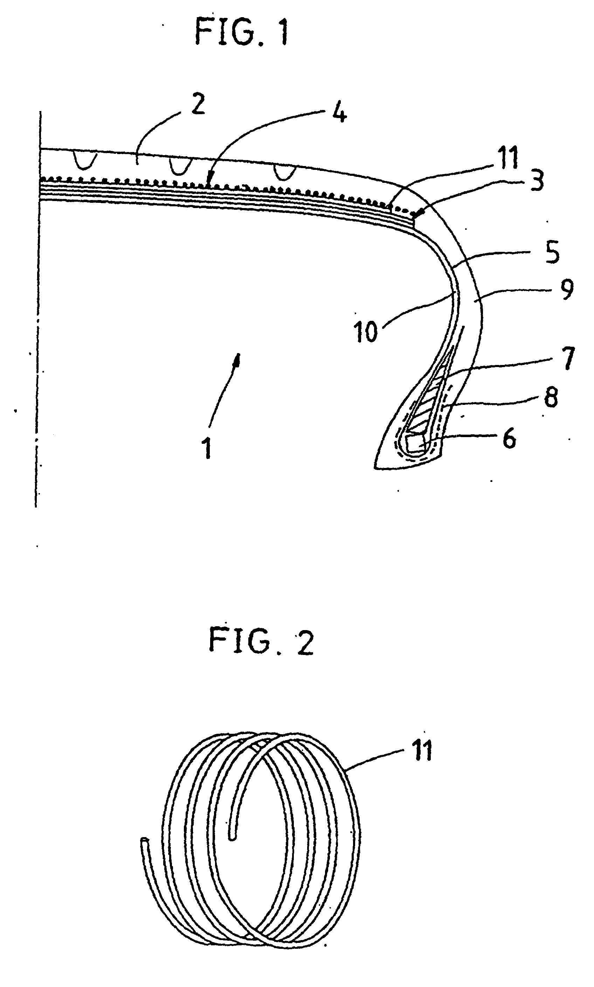

Der in Fig. 1 dargestellte Fahrzeugluftreifen 1 setzt sich aus den üblichen Reifenbauteilen zusammen und umfaßt daher einen profilierten Laufstreifen 2, einen Gürtel 3, eine Gürtelbandage 4, eine im vorliegenden Ausführungsbeispiel einlagig ausgeführte Radialkarkasse 5, die um je einen Wulstkem 6 in herkömmlicher Weise gelegt ist, je ein Kemprofil 7 radial außerhalb des Wulstkernes 6, Wulstschutzstreifen 8, je eine Seitenwand 9 und eine luftdicht ausgeführte Innenplatte 10.

Der Gürtel 3 besteht im dargestellten Ausführungsbeispiel aus zwei Gürtellagen mit in jeder Lage parallel verlaufenden Festigkeitsträgem, insbesondere aus Stahlcord, wobei die Festigkeitsträger in den beiden benachbarten Lagen einander kreuzen. Im Reifen sind die Gürtellagen derart angeordnet, daß die parallel zueinander verlaufenden Stahlcorde mit der Umfangsrichtung des Reifens einen spitzen Winkel in der Größenordnung von 15 bis 30°, insbesondere von 20 bis 25°, einschließen.

Wie Fig. 1 in Verbindung mit Fig. 2 zeigt, besteht die Gürtelbandage 4 aus einem spiralig um den Gürtel 3 gewickelten Cord 11, dessen Wicklungen bevorzugt gleich beabstandet sind und seitlich zumindest bis zur Randkante der breitesten Gürtellage reichen. Der Cord 11 besteht, wie die für Gürtelbandagen üblicherweise eingesetzten Corde, aus Fäden aus textilem Materialien, wobei Nylon, Polyester, Kevlar od. dgl. in Frage kommen.

Bevorzugt ist eine Ausführung des Cordes 11 als Einzelfilament aus textilen Fäden oder als geschlagener Cord mit zwei miteinander verdrillten Filamenten.

Wie eingangs ausführlich dargelegt ist es aus verschiedenen Gründen von Vorteil, wenn die Gürtelbandage 4 im Bereich der Reifenschultem bzw. der Gürtelrandbereiche eine höhere Spannung besitzt als im Reifenzenitbereich. Gemäß der gegenständlichen Erfindung wird dies vorrangig dadurch erreicht bzw. sichergestellt, daß der Cord 11 um sich selbst verdreht aufgebracht ist und eine höhere Drehung im Reifenzenitbereich sowie eine geringere Drehung an den Gürtelkanten bzw. Schulterbereichen besitzt. Dabei bedeutet höhere Drehung, daß der Verdrehpitch (Längenabmessung des eingedrehten Cordes 11, innerhalb weicher ein komplettes Verdrehen des Cordes 11 um sich selbst erfolgt) des Cordes 11 im Zenitbereich kleiner ist als der Verdrehpitch des Cordes im Bereich der Reifenschultern. Der Verdrehpitch wird dabei insbesondere so gewählt, daß er im Reifenzenitbereich etwa 1 bis 2 mm und an den Gürtelkantenbereichen etwa 2 bis 4 mm beträgt. Die Anzahl der Verdrehungen pro Längeneinheit verdrehter Cord 11 ist daher im Reifenzenitbereich größer und beträgt insbesondere das 1,2-bis 2,5- fache der Anzahl von Verdrehungen pro Längeneinheit verdrehter Cord in den Gürtelkantenbereichen.

Es ist bekannt, daß ein Rohreifen grundsätzlich etwas kleiner gefertigt wird, als er dann tatsächlich nach erfolgter Vulkanisation in der Form ist, was den Grund hat, daß der Rohreifen in die Vulkanisationsform eingebracht und gepreßt werden muß. Die dabei stattfindende Vergrößerung des Rohreifens wird als Resterhebung bezeichnet und ist im allgemeinen im Reifenzenitbereich etwas größer als in den Reifenschulterbereichen. Ein in sich verdrehter Cord besitzt nun einen kleineren Elastizitätsmodul als ein Cord, welcher nicht in sich verdreht ist, und wirkt wie eine Feder. Bei einer höheren Drehung, wie oben beschrieben, ist die Federwirkung größer. Um einerseits beim Aufwickeln des Cordes 11 auf den Reifen die Wickelspannung bzw. Aufzugsspannung konstant halten zu können und andererseits am fertigen Reifen in den Schulterbereichen eine höhere Bandagenspannung zu haben als im Reifenzenitbereich, wird die Verdrehung des Cordes 11 entsprechen gesteuert bzw. eingestellt. Eine konstante oder nur wenig ändernde Aufzugsspannung für den Bandagencord bietet vor allem den Vorteil, daß die erforderlichen mechanischen Einrichtungen zum Aufbringen des Cordes auf den Reifen zumindest im wesentlichen gleichmäßig bzw. gleichbleibend belastet werden. Bei bekannten Verfahren und Vorrichtungen ist aufgrund großer Unterschiede in den erforderlichen Zugkräften die mechanische Belastung der Vorrichtungen sehr groß und diese müssen entsprechend aufwendig ausgelegt werden.

Dabei wird die Änderung bzw. Einstellung der Drehung des Bandagencordes 11 insbesondere so getroffen werden, daß im mittleren Drittel zwischen den Randkanten der breitesten Gürtellage mit der Breite B die erwähnte höhere Drehung konstant bzw. im wesentlichen konstant ist und in den beiden axial äußeren Dritteln die Verdrehung zunehmend kleiner wird.

Wie dargestellt, kann dabei der Abstand zwischen den einzelnen Windungen des Cordes 11 über die gesamte Breite der Gürtelbandage 4 gleichbleibend gewählt werden, der Abstand kann jedoch auch variiert werden, indem beispielsweise zu den Randkanten des Gürtels 11 hin bzw. im Bereich der Randkanten eine höhere Dichte der Windungen und demnach eine geringerer Abstand zwischen den einzelnen Windungen gewählt wird. Für besondere Anwendungszwecke, besonders für hochgeschwindigkeitstaugliche Reifen kann ferner die erfindungsgemäße Gürtelbandage in mehr als einer Lage aufgebracht werden, beispielsweise indem im Bereich der Gürtelkanten etwa Ober mindestens 15 % der Breite B der breitesten Gürtellage. der Cord 11 doppelt gewickelt wird.

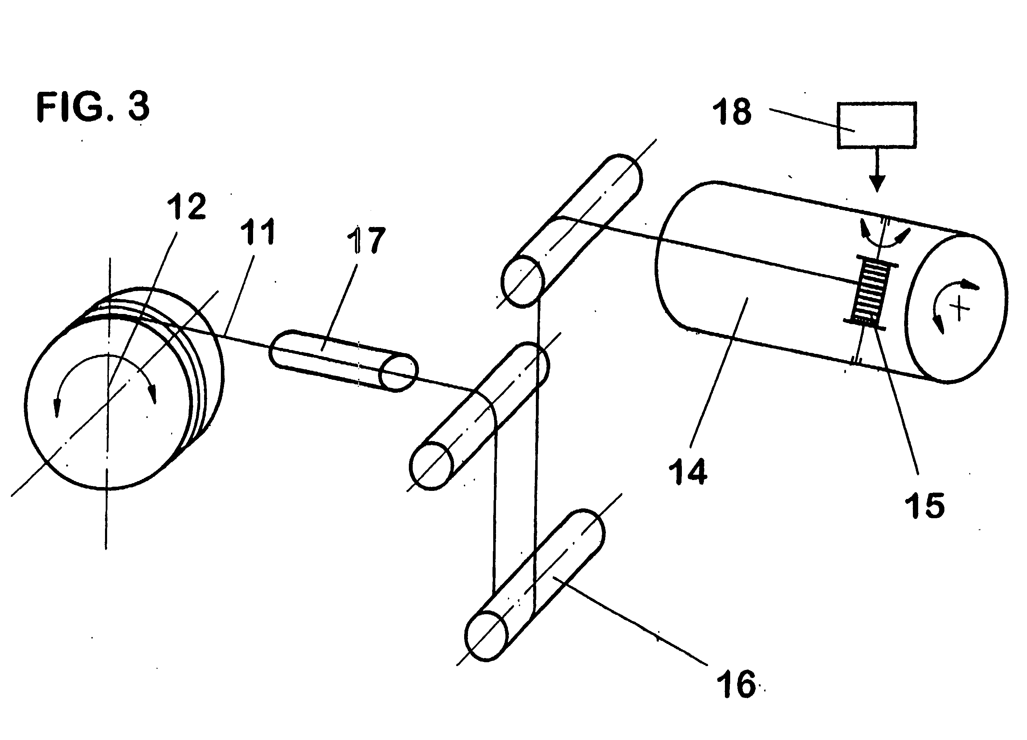

Fig. 3 zeigt schematisch eine Ausführungsform einer Vorrichtung zur Herstellung der erfindungsgemäßen Gürtelbandage. Dabei ist mit 12 eine zylindrische Reifenoder Gürtelaufbautrommel bezeichnet, wo daher zumindest das Gürtelpaket mitsamt der Bandage aufgebaut wird. Der noch nicht um sich selbst verdrehte Cord 11 wird von einer drehbar gelagerten Spule 15 abgewickelt und in einem Verdrehkopf 14 um sich selbst verdreht. Um zur Spule 15 ein Verdrehen des Cordes 11 zu vermeiden, wird die Spule 15 in die über den Verdrehkopf 14 erfolgenden Verdrehrichtung gleiche Richtung mit übereinstimmender Frequenz gedreht. Der aus dem Verdrehkopf 14 als in sich verdrehter Cord 11 austretender Cord läuft über eine Ausgleichsschleife 16, die in an sich bekannter Weise mit einer Anzahl von Rollen versehen ist, und wird über ein Führungselement 17 auf die Gürtellagen aufgewickelt. Das Führungselement 17 kann in an sich bekannter, nicht dargestellter Weise mittels einer Führungsstange und eines drehbaren Gewindeschaftes in, bezogen auf die Längserstreckung der Aufbautrommel, axialer Richtung bewegt werden. Eine programmgesteuerte Elektronik 18 stellt in Abhängigkeit von der Position des Führungselementes 17, die mittels nicht dargestellter Sensoren ermittelt werden kann, und unter Einbezug der Länge des Weges zwischen Verdrehkopf und Aufbringstelle des Cordes 11 sicher, daß der Cord 11 mit der gewünschten Verdrehung, wie oben beschrieben, aufgebracht wird. Das genannte Programm berücksichtigt die jeweiligen Daten der unterschiedlich zu bauenden Reifen, die entsprechenden Parameter der Aufbautrommel etc. und kann daher in seinem Ablauf entsprechend eingestellt werden.

Alternativ zur dargestellten Ausführungsform kann die Verdrehung des Cordes 11 auch so erfolgen, daß ein Mitdrehen der Spule unterbleiben kann. In diesem Fall wird der Verdrehkopf 14 dem Führungselement 17 möglichst unmittelbar vorgeordnet und derart gesteuert, daß nach einer gewissen Anzahl von Verdrehungen des Cordes 11 in der einen Richtung mit übereinstimmender Anzahl in der anderen Richtung gedreht wird.

Die erfindungsgemäße Vorrichtung kann femer so gestaltet sein, daß der Startpunkt für den Beginn des Wickelprozesses des Cordes 11 im Bereich der einen Gürtelkante liegt. Entsprechend ist dann auch die Programmsteuerung abzustimmen. Die erfindungsgemäße Vorrichtung kann jedoch auch so gestaltet werden, daß gleichzeitig von zwei verschiedenen Positionen, sei es von den beiden Randkanten des Gürtels oder von der Mitte aus, gewickelt wird. Dies erfordert selbstverständlich eine entsprechende Verdopplung diverser Teile der Vorrichtung und ggf. deren Kopplung miteinander. Der Cord 11 wird dabei bevorzugt unter konstanter Spannung aufgebracht, was den Vorteil hat, daß eine entsprechende Steuerung und die dazugehörigen mechanischen Vorrichtungen entfallen können. Alternativ dazu kann jedoch auch zusätzlich eine entsprechende Beeinflussung der Aufbringspannung des Cordes 11 erfolgen, was beispielsweise mit den aus der EP 0 288 609 B bekannten Mitteln, beispielsweise einer entsprechend gesteuerten Bremseinrichtung, durchgeführt werden kann.

## Patentansprüche

1. Fahrzeugluftreifen (1) mit einem profilierten Laufstreifen (2), einer insbesondere einlagig ausgeführten Radialkarkasse (5), die um Wulstkerne (6) in Wulstbereichen umgeschlagen ist, einem zumindest einlagigen Gürtel (3) und einer Gürtelbandage (4), die aus einem Cord oder Faden (11) aus organischem Fasermaterial besteht, weicher zumindest im wesentlichen parallel zur Umfangsrichtung des Reifens spiralförmig gewickelt ist, **dadurch gekennzeichnet, daß** der Bandagencord bzw. -faden (11) um sich selbst verdreht ist, wobei die Verdrehung eines kontinuierlichen Cords oder Fadens im Reifenzenitbereichs größer ist als an den Gürtelkantenbereichen des kontinuierlichen Cords oder Fadens.

2. Fahrzeugluftreifen nach Anspruch 1, **dadurch gekennzeichnet, daß** die Anzahl der Verdrehungen pro Längeneinheit verdrehter Cord (11) im Reifenzenitbereich das 1,2 bis 2,5-fache der Anzahl der Verdrehungen pro Längeneinheit verdrehter Cord (11) an den Gürtelkantenbereichen ist

3. Fahrzeugluftreifen nach Anspruch 1 oder 2, **dadurch gekennzeichnet, daß** im mittleren Drittel zwischen den Randkanten der breitesten Gürtellage die Drehung zumindest im wesentlichen konstant gehalten ist.

4. Fahrzeugluftreifen nach einem der Ansprüche 1 bis 3, **dadurch gekennzeichnet, daß** in den beiden axial äußeren Dritteln zwischen den Randkanten der breitesten Gürtellage die Verdrehung des Cordes (11) zunehmend kleiner wird.

5. Fahrzeugluftreifen nach einem der Ansprüche 1 bis 4, **dadurch gekennzeichnet, daß** der Abstand der Windungen im Bereich der Gürtelkanten kleiner gewählt ist als im Reifenzenitbereich.

6. Vorrichtung zum Aufbringen einer Bandage auf den Gürtel eines Reifens mit einer drehbaren Reifen- oder Gürtelaufbautrommel (12), zumindest einer Spule (15), von welcher der Bandagencord (11) abgewickelt wird, und einem der Trommel unmittelbar vorgelagerten Führungselement (17), durch welches der Bandagencord auf die Gürtellagen des Reifens gewickelt wird, **dadurch gekennzeichnet, daß** die Vorrichtung einen den Bandagencord (11) eindrehenden Verdrehkopf (14) und eine programmgesteuerte Elektronik (18) umfaßt, die das Aufwickeln des in sich verdrehten Cordes (11) mit größerer Verdrehung im Zentibereich und mit geringerer Verdrehung in den Seitenbereichen der Trommel (12) bewirkt.

7. Vorrichtung nach Anspruch 6, **dadurch gekennzeichnet, daß** die Spule (15) zusätzlich in die der über den Verdrehkopf (14) erfolgenden Verdrehrichtung gleiche Richtung drehbar gelagert ist.

8. Vorrichtung nach Anspruch 7, **dadurch gekennzeichnet, daß** der Verdrehkopf (14) der Spule (15) unmittelbar vorgelagert ist.

9. Vorrichtung nach Anspruch 6, **dadurch gekennzeichnet, daß** der Verdrehkopf (14) den Cord (11) mit übereinstimmender Anzahl von Verdrehungen in die eine und in die andere Richtung verdreht.

10. Vorrichtung nach Anspruch 9, **dadurch gekennzeichnet, daß** der Verdrehkopf (14) dem Führungselement (17) unmittelbar vorgeordnet ist.

11. Vorrichtung nach einem der Ansprüche 6 bis 8, **dadurch gekennzeichnet, daß** sie den Verdrehkopf (14) in Abhängigkeit von der jeweiligen Position des Führungselementes (17) , die mittels Sensoren ermittelt wird, und gegebenenfalls unter Einbezug der Länge des Cordes (11) zwischen Verdrehkopf (14) und Aufbringstelle auf den Gürtel steuert.

## Claims

1. Pneumatic vehicle tyre (1) having a profiled tread strip (2), a radial carcase (5), more especially a single-ply radial carcase, which is turned over around bead cores (6) in bead regions, and having an at least single-ply belt (3) and a belt binding (4), which comprises a cord or thread (11) formed from organic fibrous material, said cord or thread being wound in a spiral at least substantially parallel to the circumferential direction of the tyre, **characterised in that** the binding cord or thread (11) is twisted around itself, the twisting of a continuous cord or thread being greater in the tyre crown region than at the belt edge regions of the continuous cord or thread.

2. Pneumatic vehicle tyre according to claim 1, **characterised in that** the number of twists per length unit of twisted cord (11) in the tyre crown region is 1.2 to 2.5 times the number of twists per length unit of twisted cord (11) at the belt edge regions.

3. Pneumatic vehicle tyre according to claim 1 or 2, **characterised in that** in the central third between the edges of the widest belt ply, the twisting is kept at least substantially constant.

4. Pneumatic vehicle tyre according to one of claims 1 to 3, **characterised in that** in the two axially outer thirds between the edges of the widest belt ply, the twisting of the cord (11) becomes increasingly smaller.

5. Pneumatic vehicle tyre according to one of claims 1 to 4, **characterised in that** the spacing of the windings is selected smaller in the region of the belt edges than in the tyre crown region.

6. Apparatus for applying a binding to the belt of a tyre, said apparatus having a rotatable tyre or belt construction drum (12), at least one spool (15) from which the binding cord (11) is unwound and a guide element (17) mounted immediately in front of the drum and through which the binding cord is wound onto the belt plies of the tyre, **characterised in that** the apparatus includes a twisting head (14) which twists the binding cord (11) in and a program-controlled electronic unit (18) which causes the cord (11), which is twisted into itself, to wind on with greater twisting in the crown region and with lesser twisting in the side regions of the drum (12).

7. Apparatus according to claim 6, **characterised in that** the spool (15) is additionally mounted so as to be rotatable in the same direction as the twisting direction of the twisting head (14).

8. Apparatus according to claim 7, **characterised in that** the twisting head (14) is mounted immediately in front of the spool (15).

9. Apparatus according to claim 6, **characterised in that** the twisting head (14) twists the cord (11) with a matching number of twists in the one direction and in the other direction.

10. Apparatus according to claim 9, **characterised in that** the twisting head (14) is disposed immediately in front of the guide element (17).

11. Apparatus according to one of claims 6 to 8, **characterised in that** it controls the twisting head (14) in dependence on the respective position of the guide element (17), which is determined by means of sensors, and possibly taking into account the length of the cord (11) between twisting head (14) and point of application to the belt.

## Revendications

1. Pneumatique pour véhicule (1) avec une bande de roulement profilée (2), une carcasse radiale (5) en particulier à une couche, ladite carcasse étant rabattue en des zones autour de tringles (6), une ceinture (3) à une couche au moins et un bandage (4) constitué d'une corde ou d'un fil (11) en matériau de fibres organiques, ladite corde étant enroulée en forme de spirale, essentiellement en parallèle au moins par rapport au sens périphérique du pneumatique, **caractérisé en ce que** la corde ou le fil du bandage (11) est torsadé, l'enroulement d'une corde ou d'un fil continu étant plus important dans la zone de zénith du pneumatique que dans les zones aux bords de la ceinture de la corde ou du fil continu.

2. Pneumatique pour véhicule selon la revendication 1, **caractérisé en ce que** le nombre d'enroulements par unité de longueur de corde torsadée (11) dans la zone de zénith du pneumatique est de 1,2 à 2,5 fois plus important que le nombre d'enroulements par unité de longueur de corde torsadée (11) dans les zones aux bords de la ceinture.

3. Pneumatique pour véhicule selon la revendication 1 ou 2, **caractérisé en ce que** l'enroulement est maintenu essentiellement constant au moins, dans le tiers moyen situé entre les arêtes de bord de la nappe de ceinture la plus large.

4. Pneumatique pour véhicule selon l'une quelconque des revendications 1 à 3, **caractérisé en ce que** l'enroulement de la corde (11) devient de plus en plus petit au niveau des deux tiers d'extrémité axiale, entre les arêtes de bord de la nappe de ceinture la plus large.

5. Pneumatique pour véhicule selon l'une quelconque des revendications 1 à 4, **caractérisé en ce que** la distance sélectionnée des spires au niveau des arêtes de ceinture est plus petite que dans la zone de zénith du pneumatique.

6. Dispositif d'application d'un bandage sur la ceinture d'un pneumatique avec un tambour rotatif de construction de pneumatique ou de ceinture (12), une bobine (15) au moins, à partir de laquelle la corde de bandage (11) est déroulée, et un élément de guidage (17) situé à proximité immédiate devant le tambour, au moyen duquel la corde de bandage est enroulée sur les nappes de ceinture du pneumatique, **caractérisé en ce que** ledit dispositif comprend une tête de rotation (14) destinée à enrouler la corde du bandage (11) et un système électronique commandé par programme (18), ledit système électronique provoquant l'enroulement de la corde torsadée (11) avec une rotation plus importante au niveau du zénith et une rotation plus faible dans les zones latérales du tambour (12).

7. Dispositif selon la revendication 6, **caractérisé en ce que** la bobine (15) est également positionnée de manière mobile autour d'un axe, dans le même sens que le sens de torsion au-dessus de la tête de rotation (14).

8. Dispositif selon la revendication 7, **caractérisé en ce que** la tête de rotation (14) est située à proximité immédiate devant la bobine (15).

9. Dispositif selon la revendication 6, **caractérisé en ce que** la tête de rotation (14) enroule la corde (11) avec un nombre concordant de tours dans un sens et dans l'autre.

10. Dispositif selon la revendication 9, **caractérisé en ce que** la tête de rotation (14) est située à proximité immédiate devant l'élément de guidage (17).

11. Dispositif selon l'une quelconque des revendications 6 à 8, **caractérisé en ce que** ledit dispositif dirige la tête de rotation (14) sur la ceinture, en fonction de la position respective de l'élément de guidage (17), définie à l'aide de capteurs et, le cas échéant, en tenant compte de la longueur de la corde (11) entre la tête de rotation (14) et le point d'application.
